# EUROPÄISCHE PATENTSCHRIFT

(11) **EP 3 988 215 B1**
(45) Veröffentlichungstag und Bekanntmachung des Hinweises auf die Patenterteilung: **28.01.2026**
(21) Anmeldenummer: 21200483.2
(22) Anmeldetag: 01.10.2021
(51) Int. Cl.: B02C 21/02, B02C 23/02, B07B 1/00, B65G 21/12, B65G 41/00, B07B 13/16

(54) **MATERIALVERARBEITUNGSEINRICHTUNG**
MATERIAL PROCESSING DEVICE
DISPOSITIF DE TRAITEMENT DES MATIÈRES

(30) Priorität: 12.10.2020 DE 102020126743
(43) Veröffentlichungstag der Anmeldung: 27.04.2022
(73) Patentinhaber: KLEEMANN GMBH, 73037 Göppingen (DE)
(72) Erfinder: WAGNER, Monika, 73098 Rechberghausen (DE); KNOBLICH, Christian, 70178 Stuttgart (DE); KAZMAIER, Benjamin, 73277 Owen (DE)
(74) Vertreter: Herrmann, Jochen

(56) Entgegenhaltungen:
- EP-A1- 3 757 040
- WO-A1-97/37777
- DE-U1- 9 305 837
- US-A1- 2018 334 332

## Beschreibung

Die Erfindung betrifft eine Materialverarbeitungseinrichtung, umfassend die kombinierte Merkmale gemäss dem Oberbegriff des Anspruchs 1.

EP 2 837 583 A1 offenbart eine Materialverarbeitungseinrichtung, die als Materialverarbeitungseinheit ein Brechaggregat zum Zerkleinern von mineralischem Material aufweist. Im Anschluss an das Brechaggregat ist eine Siebeinheit vorgesehen. In dieser Siebeinheit kann das von dem Brechaggregat kommende und zerkleinerte Material klassifiziert werden. Unterhalb der Siebeinheit ist ein Förderband vorgesehen, welches die ausgesiebte Gesteinsfraktion an seinem proximalen Endbereich aufnimmt. Das hier zugeführte Material kann mittels des Transportbandes zu seinem distalen Ende transportiert und hier abgeworfen, beispielsweise auf einen Schüttguthaufen aufgegeben werden. Zur Verstellung des Transportbands zwischen einer Arbeits- und einer Transportposition kann es mittels einer Gelenkverbindung gegenüber dem Maschinengestell der Materialverarbeitungseinrichtung verschwenkt werden. Die Verschwenkung erfolgt dabei um eine Schwenkachse, die im Wesentlichen parallel zum Boden verläuft.

EP 3 041 611 offenbart eine Materialbearbeitungseinrichtung, welche ebenfalls ein Brechaggregat aufweist. Es sind mehrere Transportbänder vorgesehen, über die das zu brechende Material dem Brechaggregat zugeführt bzw. das gebrochene Material von dem Brechaggregat abgeführt wird. Zusätzlich ist eine Siebeinheit vorgesehen, die zum Klassifizieren des Brechguts verwendet wird. Die Siebeinheit und die Transportbänder können von einer aufgestellten Arbeitsposition in eine abgeklappte Transportposition bewegt werden.

WO 97/37777 A1 offenbart eine mobile Trommelsiebmaschine. Ausgesiebtes Material wird auf einen Ausgabeförderer aufgegeben und aus dem Bereich der Siebtrommel hinwegbefördert. Material, das nicht ausgesiebt wird, gelangt durch die Siebtrommel bis zu einem Ausschussmaterialförderer. An dem Förderer ist ein Rahmen mit Bohrungen vorgesehen, durch die Lagerbolzen zur Bildung eines Schwenklagers mit dem Chassis der Trommelsiebmaschine geführt werden können. An dem Rahmen ist ferner ein hydraulisches Zylinder-Kolben-System angeschlossen, mittels dessen ein Verschwenken des Förderers gegenüber dem Chassis zwischen einer ausgestreckten und einer eingezogenen Stellung bewirkt wird.

Auch US 2018/334332 A1 offenbart eine mobile Siebmaschine. Durch eine Siebtrommel ausgesiebtes Material wird auf einen Sammelförderer aufgegeben und zu einem Auslassende transportiert, wo es auf einen Austragsförderer aufgegeben. Der Austragsförderer ist an einem Gestell befestigt, das wiederum mit einem Schwenkarm starr verbunden ist. Der Schwenkarm ist mit einem Hauptrahmen der Siebmaschine im Bereich eines Schwenklagers schwenkbar verbunden. Ferner ist ein hydraulischer Hebezylinder vorgesehen, der einerseits an dem Schwenkarm und andererseits an dem Hauptrahmen schwenkbar gelagert ist. Somit kann der Austragsförderer mittels des Hebezylinders um die Achse des Schwenklagers gegenüber der Siebmaschine geschwenkt werden.

Aus EP 3 757 040 A1 ist eine mobile Zerkleinerungsmaschine bekannt. Zerkleinertes Material wird mittels eines Längsförderbands zu einem Heckförderband gefördert. Das Heckförderband ist mittels eines Lenkers, der an dem Heckförderband und an einem Chassis angekoppelt ist, schwenkbar gelagert. Ferner ist ein Hydraulikzylinder vorgesehen, der einerseits an das Heckförderband und andererseits an das Chassis schwenkbar angekoppelt ist. Mittels des Hydraulikzylinders kann das Heckförderband zwischen einer Arbeitsstellung und einer Transportstellung verstellt werden.

EP 3 757 040 A1 offenbart eine mobile Materialverarbeitungseinrichtung. Verarbeitetes Material gelangt über einen Übergabeförderer auf ein Aufgabeende eines Austragsförderers. Der Austragsförderer ist im Bereich seines Aufgabeendes mittels einer Verbindung schwenkbar mit der Materialverarbeitungseinrichtung verbunden. Hierbei ist die Verbindung derart ausgestaltet, dass mit dem Austragförderer ein Kupplungsstück fest verbunden ist, das in einem maulförmig ausgebildeten Kupplungsteil der Materialverarbeitungseinrichtung aufgenommen ist. Ferner ist ein Aktuator vorgesehen, der an einem Ende mit der Materialverarbeitungseinrichtung und an einem gegenüberliegenden Ende mit dem Austragförderer schwenkbar verbunden ist. So kann durch eine Verstellung des Aktuators ein Verschwenken des Austragförderers um eine Schwenkachse der Verbindung zwischen einem Betriebszustand und einem Transportzustand bewirkt werden.

Materialverarbeitungseinrichtungen der erfindungsgemäßen Art dienen beispielsweise dazu, auf Baustellen Schüttgut (zum Beispiel grob gebrochenen Beton oder sonstiges mineralisches Gesteinsmaterial) vor Ort in einem Brechaggregat als Materialverarbeitungseinheit zu zerkleinern. Das zerkleinerte Material kann dann entweder direkt an der Baustelle oder in sonstiger geeigneter Weise weiter verwendet werden.

Weitere erfindungsgemäße Materialverarbeitungseinrichtungen dienen dazu Schüttgut, beispielsweise mineralisches Schüttgut, in einer Siebeinheit, die eine Materialverarbeitungseinheit bildet zu sieben. Dabei werden unterschiedliche Gesteinsfraktionen gebildet. Die Gesteinsfraktionen werden dann entweder einer weiteren Materialbearbeitungseinheit zugeführt oder auf Schüttguthaufen gefördert. Im Rahmen der Erfindung sollen auch kombinierte Materialverarbeitungseinrichtungen verstanden werden, bei denen diese beiden Maschinentypen kombiniert sind und die entsprechend ein Brechaggregat und eine Siebeinheit aufweisen, wie beispielsweise die vorstehend erwähnte EP 2 837 583 A1.

Nach erledigter Arbeit wird die Materialverarbeitungseinrichtung umgebaut und in eine Transport-Konfiguration gebracht, die es erlaubt, die Materialverarbeitungseinrichtung platzsparend auf einem Tieflader zu positionieren. Zu diesem Zweck wird das Transportband bei den aus dem Stand der Technik bekannten Materialverarbeitungseinrichtungen verschwenkt und in eine Transportposition gebracht.

Aufgabe der Erfindung ist es, eine Materialverarbeitungseinrichtung der eingangs erwähnten Art bereitzustellen, mit der auf einfache Weise eine platzsparende Bauweise verwirklicht werden kann.

Die Erfindung wird dadurch gelöst, dass der Stellmechanismus einen ersten und einen zweiten Lenker aufweist, dass der erste Lenker mittels eines ersten Gelenks an einem Maschinenkörper der Materialverarbeitungseinrichtung und mittels eines zweiten Gelenks an dem proximalen Endbereich des Förderbands schwenkbar angekoppelt ist, dass der zweite Lenker mittels eines dritten Gelenks an dem Maschinenkörper der Materialverarbeitungseinrichtung und mittels eines vierten Gelenks an dem proximalen Endbereich des Förderbands schwenkbar angekoppelt ist, und dass das zweite und das vierte Gelenk unterschiedlich weit von dem proximalen Ende beabstandet sind.

Erfindungsgemäß wird mithin das Förderband entgegen der Schwerkraftrichtung von der abgeklappten Arbeitsposition in die aufgeklappte Transportposition verschwenkt und dabei das proximale Ende gleichzeitig entgegen der Schwerkraftrichtung angehoben. Dies stellt einen wesentlichen Unterschied zum Stand der Technik dar, wobei bei dieser Verstellbewegung des Förderbandes das proximale Ende zunächst abgesenkt wird. Hierdurch wird für die Verstellbewegung ein Schwenkbereich unterhalb des proximalen Endes benötigt, um eine Kollision mit dem Boden zu vermeiden. Demgegenüber benötigt die erfindungsgemäße Lösung weniger Bauraum unterhalb des proximalen Endes. Entsprechend kann der proximale Endbereich des Förderbands in der Arbeitsstellung tief und dicht über dem Boden angeordnet werden. Hierdurch lässt sich die erforderliche Bauhöhe der Materialverarbeitungseinrichtung reduzieren. Ausgehend von der Arbeitsstellung heraus lässt sich das Förderband dann einfach mittels des Stellmechanismus in die Transportposition schwenken. In der Transportposition behindert das Förderband die Verladung und den Transport der Materialverarbeitungseinrichtung auf dem Tieflader nicht.

Gemäß einer bevorzugten Ausgestaltungsvariante der Erfindung kann es vorgesehen sein, dass das proximale Ende des Förderbands in der Arbeitsposition unterhalb eines Maschinenkörpers der Materialverarbeitungseinrichtung so angeordnet ist, dass eine Materialfördereinrichtung der Materialverarbeitungseinrichtung mit ihrem Abwurfbereich entgegen der Schwerkraftrichtung oberhalb des proximalen Endbereichs des Förderbandes endet, und dass in der Transportposition das proximale Ende des Förderbands seitlich und im horizontalen Abstand zu dem Abwurfbereich der Materialfördereinrichtung steht.

Erfindungsgemäß ist vorgesehen, dass der Stellmechanismus einen ersten und einen zweiten Lenker aufweist, dass der erste Lenker mittels eines ersten Gelenks an einem Maschinenkörper der Materialverarbeitungseinrichtung und mittels eines zweiten Gelenks an dem proximalen Endbereich des Förderbands schwenkbar angekoppelt ist, dass der zweite Lenker mittels eines dritten Gelenks an dem Maschinenkörper der Materialverarbeitungseinrichtung und mittels eines vierten Gelenks an dem proximalen Endbereich des Transportbands schwenkbar angekoppelt ist, und dass das zweite und das vierte Gelenk unterschiedlich weit von dem proximalen Ende beabstandet sind. Auf diese Weise wird ein Viergelenkssystem gebildet, mit dem das Förderband während der Schwenkbewegung auf einfache Weise stabil und sicher geführt werden kann. Vorzugsweise sind dabei die von den Gelenken gebildeten Gelenksachsen zueinander parallel ausgerichtet. Das proximale Ende des Förderbands wird mit einem solchen Mechanismus auf einer Kurvenbahn verstellt. Abhängig von der Geometrie der Lenker und der Positionierung der Gelenke kann dabei die Kurvenbahn geeignet eingestellt und auf die Platzverhältnisse der Materialverarbeitungseinrichtung angepasst werden.

Hierbei lässt sich eine besonders stabile Aufhängung des Förderbands erreichen, wenn auf den beiden, der sich von dem proximalen Ende zum distalen Ende hin erstreckenden Seiten des proximalen Endbereichs jeweils ein erster und ein zweiter Lenker angeordnet sind, wobei die Gelenke der Lenker jeweils paarweise, zur Bildung gemeinsamer Schwenkachsen miteinander fluchten.

Zu diesem Zweck kann es insbesondere vorgesehen sein, dass der erste Lenker eine erste Hebellänge zwischen dem ersten und dem zweiten Gelenk und der zweite Lenker eine zweite Hebellänge zwischen dem dritten und dem vierten Gelenk aufweist, und dass die Hebellängen unterschiedlich sind. Besonders bevorzugt kann dabei vorgesehen sein, dass der erste Lenker, welcher mit dem zweiten Gelenk näher am proximalen Ende des Förderbands angekoppelt ist, eine längere Hebellänge aufweist als der zweite Lenker. Mit einer solchen Anordnung können die Kräfte, welche aufgrund der Gewichtskraft des Förderbands einwirken, sicher über den Stellmechanismus abgetragen werden. Die Bewegung des proximalen Endes lässt sich auf diese Weise minimieren.

Dabei kann es besonders bevorzugt vorgesehen sein, dass das Verhältnis der zweiten Hebellänge zu der ersten Hebellänge zwischen 1:2 und 1:3 gewählt ist, besonders bevorzugt zwischen 1:2,3 und 1:2,7, gewählt ist.

Für einen einfachen und platzsparenden Aufbau kann es vorgesehen sein, dass wenigstens einer der Lenker des Stellmechanismus ein Koppelstück aufweist, an das ein Kraftübertragungsmittel der Stelleinheit angekoppelt ist. Vorzugsweise wird das Koppelstück an dem vorstehend genannten Lenker mit dem längeren Hebelarm verwendet. Alternativ kann das Kraftübertragungsmittel auch direkt mit dem Förderband gekoppelt sein.

Denkbar ist es auch, dass ein Aktuator, insbesondere ein Linear-Aktuator, vorzugsweise ein Hydraulikzylinder, an einem der Lenker schwenkbar angekoppelt ist, um eine Verstellung des Förderbandes zwischen der Arbeitsposition und der Transportposition zu ermöglichen.

Wenn vorgesehen ist, dass das Kraftübertragungsmittel ein Zugmittel, insbesondere ein biegeschlaffes Bauteil ist, das mit einem Aktuator der Stelleinheit, insbesondere mit einer motorischen oder hydraulischen Einheit, vorzugsweise mit einem Hydraulikzylinder, gekoppelt ist, dann kann mit geringem Teile- und Montageaufwand eine Konstruktion erreicht werden, mit der sich das Förderband zuverlässig verstellen lässt. Als Zugmittel kann dabei beispielsweise ein Seil oder eine Kette Verwendung finden.

Um das Förderband in der Arbeitsposition und/oder der Transportposition zuverlässig zu sichern kann es vorgesehen sein, dass am proximalen Endbereich des Förderbands ein Halter vorgesehen ist, an dem ein Sicherungselement mittels eines ersten Lagers angeschlossen ist, und dass das Sicherungselement ein zweites Lager aufweist, mittels dem das Sicherungselement in der Arbeitsposition und/oder der Transportposition des Förderbands an einem Träger der Materialverarbeitungseinrichtung befestigt ist.

Zu diesem Zweck kann es auch zusätzlich oder alternativ vorgesehen sein, dass an einem der Lenker ein Anschlag angeordnet ist, der in der Arbeitsposition und/oder in der Transportposition an einem Gegenanschlag der Materialverarbeitungseinrichtung anliegt. Hierbei kann eine formschlüssige Anlage zwischen Anschlag und Gegenanschlag vorgesehen sein, so dass die Last des Förderbandes zuverlässig in den Maschinenkörper abgeführt werden kann.

Eine besonders bevorzugte Erfindungsvariante ist dergestalt, dass das Förderband ein Basisteil aufweist, welches den proximalen Endbereich bildet, das mit dem Basisteil ein Förderbandteil mittels eines Schwenklagers verbunden ist, und das mittels des Schwenklagers das Förderbandteil gegenüber dem Basisteil verschwenkbar ist, wobei vorzugsweise die Schwenkachse senkrecht zur Förderrichtung des Förderbands verläuft. Vorzugsweise kann es dabei insbesondere vorgesehen sein, dass das Förderbandteil den distalen Endbereich des Förderbandes bildet. Das Förderbandteil kann zur platzsparenden Positionierung des Förderbands gegenüber dem Basisteil verschwenkt werden. Dementsprechend kann das Förderband zum einen aus seiner abgeklappten Arbeitsposition in seine aufgeklappte Transportposition mittels des Stellmechanismus verschwenkt werden. Zusätzlich kann dann das Förderbandteil gegenüber dem Basisteil abgeklappt werden. Mit anderen Worten steht dann das Förderbandteil nicht mehr in gestreckter Ausrichtung zum Basisteil sondern ist gegenüber dem Basisteil im Winkel angeordnet. Vorzugsweise ergibt sich dabei zwischen der Längserstreckung des Basisteils und der Längserstreckung des Förderbandteils ein eingeschlossener Winkel im Bereich zwischen 45° und 135°, vorzugsweise ein Winkel im Bereich zwischen 80° bis 100°. Vorzugsweise ist das Förderbandteil in der abgeklappten Stellung seitlich an die Materialbearbeitungseinrichtung angelegt. Weiter bevorzugt ist die Schwenkachse des Schwenklagers quer zur Förderrichtung des Förderbands ausgerichtet. Insbesondere kann die Schwenkachse des Schwenklagers quer zur Förderrichtung des Förderbandes so ausgerichtet sein, dass sich das Förderbandteil in der abgeklappten Stellung in Fahrtrichtung einer mobilen Materialverarbeitungseinrichtung erstreckt.

Eine denkbare Erfindungsvariante kann dergestalt sein, dass die Materialverarbeitungseinheit eine Siebeinheit ist, wobei die Siebeinheit wenigstens ein, vorzugsweise wenigstens zwei übereinander angeordnete Siebdecks aufweist, wobei das durch zumindest ein Siebdeck hindurchgesiebte Material von der Siebeinheit mittelbar oder unmittelbar auf den proximalen Endbereich des Förderbands gefördert wird. Hierbei kann es beispielsweise vorgesehen sein, dass das von der Siebeinheit ausgesiebte Material über ein Übergabeband aus dem Arbeitsbereich der Siebeinheit heraus- und dem proximalen Endbereich des Förderbands zugefördert wird.

Denkbar ist es dabei auch, dass die Siebeinheit einen Ableitbereich aufweist, wobei der Ableitbereich an die Oberseite eines Siebdecks angeschlossen ist, wobei der Ableitbereich mittelbar oder unmittelbar zu einem Rückführband geführt ist, und dass das Rückführband ein Abwurfende aufweist, über das das von dem Rückführband geförderte Förderbandmaterial einer Materialbearbeitungseinheit, insbesondere einem Brechaggregat, zugeleitet ist.

Die Erfindung wird im Folgenden anhand eines in den Zeichnungen dargestellten Ausführungsbeispiels näher erläutert. Es zeigen:
Figur 1 in perspektivischer Darstellung eine Materialverarbeitungseinrichtung,
Figur 2 die Materialverarbeitungseinrichtung gemäß Figur 1 in Ansicht von hinten,
Figur 3 die Darstellung gemäß Figur 2 in einer veränderten Betriebsposition,

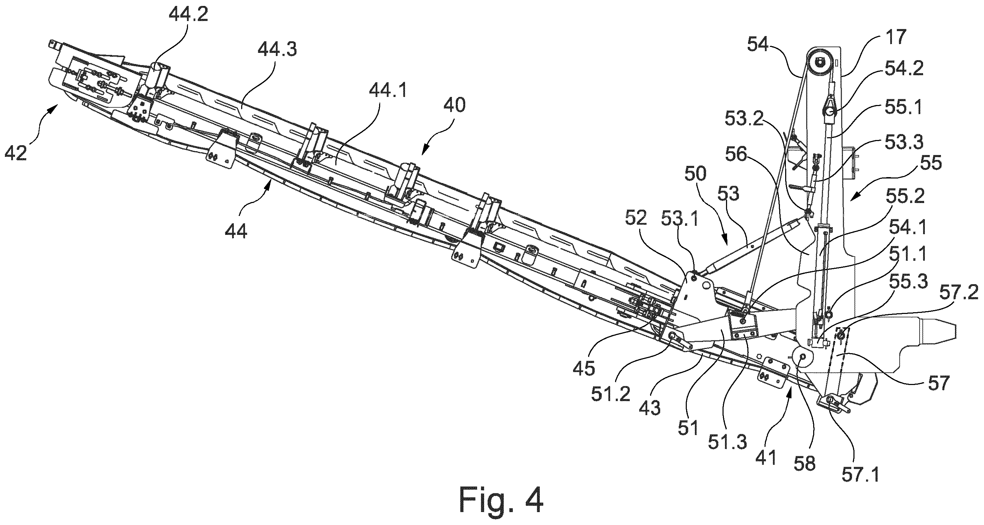

Figur 4 ein der Figur 2 entnommenes Detail,
Figur 5 eine Prinzipskizze eines Schwenkmechanismus in Seitenansicht in einer Arbeitsposition und
Figur 6 eine Prinzipskizze des Schwenkmechanismus gemäß Figur 5 in einer Transportposition.

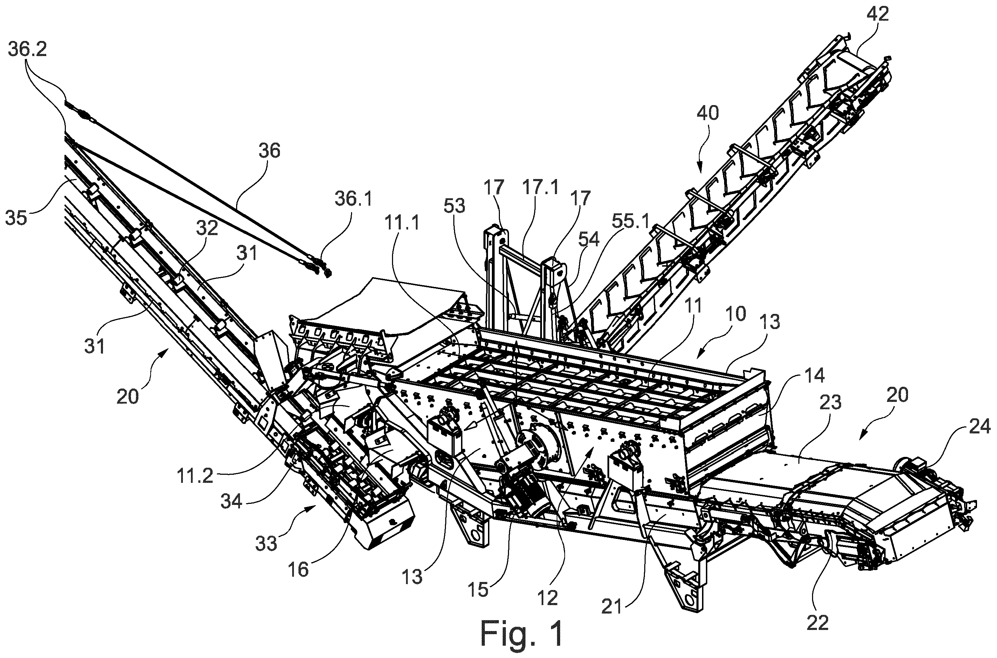

Figur 1 zeigt eine Materialverarbeitungseinrichtung 10 mit einer Materialbearbeitungseinheit, die vorliegend in Form einer Siebeinheit ausgebildet ist. Die Siebeinheit besitzt mehrere Siebdecks 11, die in einem Maschinenkörper 12 übereinander angeordnet sind. Der Maschinenkörper 12 bildet dabei das Siebgehäuse der Siebeinheit. Die Siebdecks 11 sind in Schwerkraftrichtung übereinander angeordnet.

Der Maschinenkörper 12 weist zwei zueinander parallele Seitenwände 13 auf, die mit einer Rückwand 14 miteinander verbunden sind. Am Maschinenkörper 12 ist ein Vibrationsantrieb 15 angeordnet. Mit diesem Vibrationsantrieb 15 können die einzelnen Siebdecks 11 in Schwingung versetzt werden. Wie die Zeichnung erkennen lässt, sind die Siebdecks 11 gegenüber der Horizontalen in der Bildebene von rechts nach links abfallend geneigt. Die Siebdecks 11 weisen eine unterschiedliche Maschenweite auf. Dabei bildet das oberste Siebdeck 11 die größte Maschenweite. Das oberste Siebdeck 11 geht in Transportrichtung in einen Ableitbereich 11.1 über. Material, welches auf das obere Siebdeck 11 aufgegeben wird, wird an diesem Siebdeck 11 gesiebt. Die Materialteile, welche aufgrund ihrer Größe nicht durch das Siebdeck 11 hindurch fallen, werden dem Ableitbereich 11.1 zugeleitet. Der Ableitbereich 11.1 fördert das Material zu einem ersten Übergabeband 11.2. Dieses erste Übergabeband 11.2 nimmt das Material vom Ableitbereich 11.1 kommend auf und fördert es quer zur Förderrichtung des Ableitbereichs 11.1 einem Rückführband 30 zu.

Das Rückführband 30 weist zwei seitliche Längsstreben 31 auf, die sich in Förderrichtung des Rückführbands 30 erstrecken. Die Längsstreben 31 sind Teil einer Tragstruktur des Rückführbands 30. An dieser Tragstruktur sind Rollen 32 befestigt. Auf den Rollen 32 kann ein endlos umlaufendes Förderband (nicht dargestellt) abrollen.

Unterhalb des ersten Übergabebands 11.2 ist ein Trichter 34 des Rückführbands 30 angeordnet. Dieser Trichter 34 verhindert, dass das vom ersten Übergabeband 11.2 kommende Material seitlich vom Rückführband 30 fallen kann.

Das Material wird ausgehend von einem, im Bereich des Trichters 34 gebildeten Aufnahmebereich 33, mittels des Förderbands zu einem Abwurfende 35 gefördert. An das Abwurfende 35 kann sich eine Materialbearbeitungseinheit, insbesondere ein Brechaggregat, anschließen. In diesem Brechaggregat wird das Material aufgenommen und zerkleinert. Bei dem Brechaggregat kann es sich um einen Backenbrecher, einen Rotationsprallbrecher oder einen sonstigen Gesteinsbrecher handeln.

Wie Figur 1 erkennen lässt, sind im Bereich des Abwurfendes 35 Zugelemente 36 mittels Befestigungsstücken 36.2 am Rückführband 30 befestigt. Die Zugelemente 36 können von beispielsweise Seilen oder Ketten gebildet sein. Die Zugelemente 36 tragen an ihrem dem Abwurfende 35 abgewandten Ende weitere Befestigungsstücke 36.1. Mit diesen Befestigungsstücken 36.1 können die Zugelemente 36 an einem nicht dargestellten Maschinenbauteil befestigt werden. Auf diese Weise wird das Rückführband 30 stabilisiert.

Die Siebeinheit weist unterhalb des oberen Siebdecks 11 noch ein weiteres Siebdeck 11 auf, das in der Darstellung gemäß Figur 1 nicht mehr erkennbar ist, da es im Maschinenkörper 12 angeordnet ist.

Das unter dem oberen Siebdeck 11 angeordnete Siebdeck weist eine Maschenweite auf, die kleiner ist als die Maschenweite des oberen Siebdecks 11. Das Material, das von den Siebdecks 11 ausgesiebt wurde gelangt auf ein Feinkornband 20. Das Feinkornband 20 weist ein endlos umlaufendes Transportband auf, welches unterhalb des Maschinenkörpers 12 seinen Aufgabebereich aufweist. Auf diesen Aufgabebereich fällt das ausgesiebte Material und wird mit dem Feinkornband 20 zum Abwurfende 22 des Feinkornbands 20 transportiert. Am Abwurfende 22 verlässt das ausgesiebte Material die Materialverarbeitungseinrichtung 10 und wird auf einen Schüttguthaufen gefördert oder einer weiteren Bearbeitungseinrichtung zugeführt. Um zu vermeiden, dass seitlich Material von dem Feinkornband 20 abfällt, kann eine Abdeckung 23 vorgesehen sein, die das Feinkornband 20 im Anschluss an den Maschinenkörper 12 abdeckt.

Das Feinkornband 20 weist eine Tragstruktur 21 auf. Mittels dieser Tragstruktur 21 ist das Feinkornband 20 mit dem Maschinenkörper 12 verbunden. Zum Antrieb des endlos umlaufenden Transportbands ist im Bereich des Abwurfendes 22 ein Antrieb 24 vorgesehen.

Zur Befestigung der aus der Siebeinheit und dem Feinkornband 20 bestehenden Baueinheit an einer Materialverarbeitungseinheit sind Koppelstücke vorgesehen. Mittels dieser Koppelstücke kann diese Baueinheit mit der Materialverarbeitungseinheit verschraubt werden. Die Materialverarbeitungseinheit kann dabei das oben beschriebene Brechaggregat umfassen.

Wie oben beschrieben, wird von dem oberen Siebdeck 11 Material ausgesiebt. Dieses fällt auf das darunterliegende Siebdeck 11. Die Materialfraktion, welche von dem darunterliegenden Siebdeck 11 nicht ausgesiebt wird, wird von der Siebeinheit auf ein zweites Übergabeband 16 gefördert. Die Förderrichtung des zweiten Übergabebands 16 verläuft dabei quer zur Förderrichtung des Siebdecks 11. Das ausgesiebte Material gelangt über das zweite Übergabeband 16 zu einem Förderband 40.

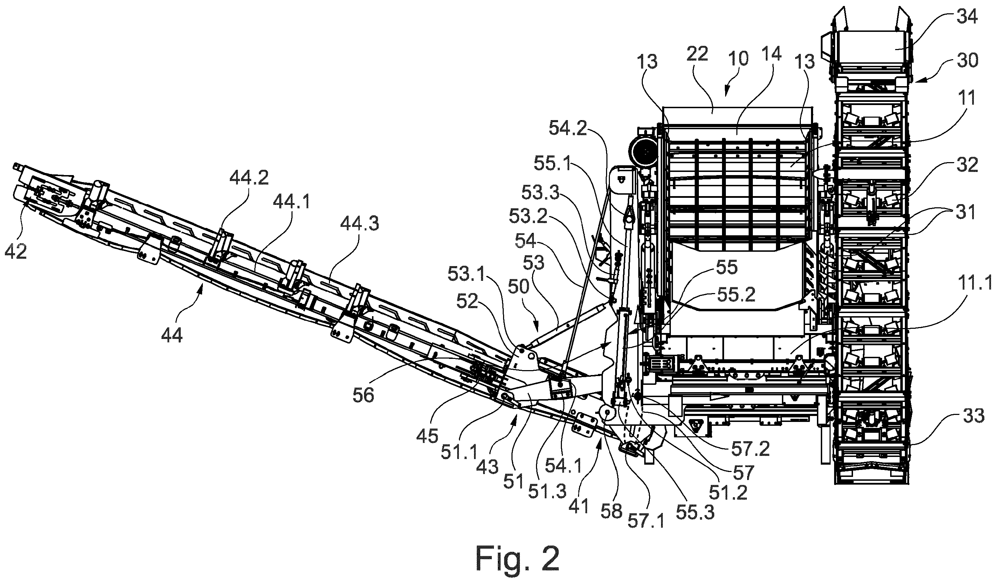

Figur 2 lässt den Aufbau dieses Förderbands 40 näher erkennen. Wie die Darstellung zeigt, kann das Förderband 40 einen Aufbau aufweisen, der prinzipiell gleich ist, wie der Aufbau des Rückführbands 30.

Entsprechend sind zwei in Längsrichtung des Förderbands 40 verlaufende Streben 44.1 verwendet. Die Streben 44.1 sind Teil einer Tragstruktur. An der Tragstruktur sind Rollen 44.2 für ein endlos umlaufendes Förderband 44.3 befestigt. Das Förderband 44 weist einen aufgabeseitigen proximalen Endbereich 41 auf. Dieser proximale Endbereich ist der Siebeinheit zugeordnet. Der proximale Endbereich bildet ein proximales Ende. Am gegenüberliegenden Ende besitzt das Förderband 40 einen distalen Endbereich mit einem distalen Ende 42.

Der proximale Endbereich 41 wird von einem Basisteil 43 gebildet. Demgegenüber wird der distale Endbereich mit seinem distalen Ende 42 von einem Förderbandteil 44 gebildet. Zwischen dem proximalen Endbereich 41 und dem distalen Endbereich ist ein Mittenbereich des Förderbands 40 gebildet. Dieser Mittenbereich des Förderbands 40 wird von dem Förderbandteil 44 gebildet.

Das Basisteil 43 ist über ein Schwenklager 45 mit dem Förderbandteil 44 gekoppelt. Mittels des Schwenklagers 45 kann das Förderbandteil 44 gegenüber dem Basisteil 43 verschwenkt werden. Die Schwenkachse verläuft dabei senkrecht zur Förderrichtung des Förderbands 44 und in einer Ebene, die parallel zur Bildebene gemäß Figur 2 steht.

Das Basisteil 43 des Förderbands 40 weist einen seitlich angeordneten Halter 52 auf. An diesem Halter 52 kann ein Sicherungselement 53 befestigt werden. Zu diesem Zweck weist das Sicherungselement 53 ein Lager 53.1 auf mit dem es schwenkbar an den Halter 52 angekoppelt ist. Am gegenüberliegenden Ende besitzt das Sicherungselement 53 ein weiteres Lager 53.2. Mit diesem weiteren Lager 53.2 ist das Sicherungselement 53 schwenkbar an den Maschinenkörper 12 angekoppelt.

Beispielsweise kann die Zuordnung dabei so getroffen sein, dass am Maschinenkörper 12 vertikale Träger 17 befestigt sind. Zur Aussteifung gegeneinander können die beiden Träger 17 mittels einer Querstrebe 17.1 miteinander verbunden sein. Das Sicherungselement 53 ist an einem der Träger 17 befestigt. Mit dem Sicherungselement 53 kann das Förderband 40 in der in Figur 2 gezeigten Arbeitsposition abgespannt werden.

Wie Figur 2 weiter zeigt, ist ein Stellmechanismus 50 vorgesehen. Der Stellmechanismus 50 weist einen ersten Lenker 51 und einen zweiten Lenker 57 auf. Der erste Lenker 51 ist mittels eines ersten Gelenks 51.1 schwenkbar an das Basisteil 43 angekoppelt. Ein zweites Gelenk 51.2 des ersten Lenkers 51 ist schwenkbar an dem Maschinenkörper 12, beispielsweise wie vorliegend an einem Träger 17 angekoppelt.

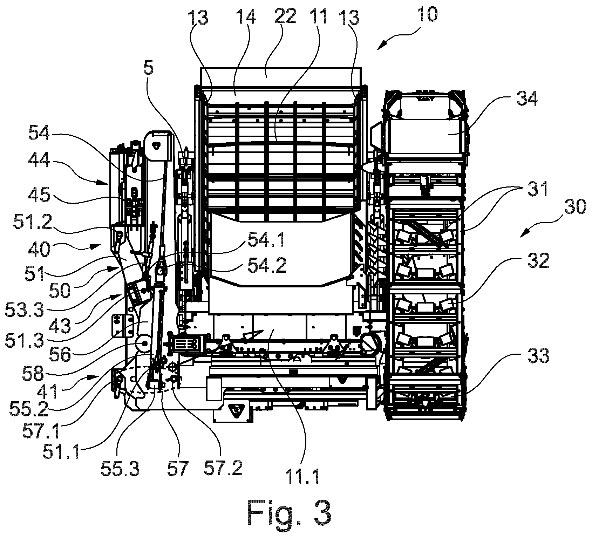

Der zweite Lenker 57 ist in den Figuren 2 und 3 gestrichelt dargestellt. Er ist mit einem dritten Gelenk 57.1 schwenkbar an das Basisteil 43 des Förderbands 40 angekoppelt. Ein viertes Gelenk 57.2 verbindet den zweiten Lenker 57 mit dem Maschinenkörper 12. Beispielsweise kann das vierte Gelenk 57.2 dabei an dem Träger 17, welcher mit dem Maschinenkörper 12 gekoppelt ist, vorgesehen sein.

Wie Figur 2 erkennen lässt, ist das dritte Gelenk 57.1 näher an dem proximalen Ende des Förderbands 40 angeordnet, als das erste Gelenk 51.1.

Figur 2 lässt weiter erkennen, dass der erste Lenker 51 eine erste Hebellänge aufweist, die sich von dem ersten Gelenk 51.1 zu dem zweiten Gelenk 51.2 erstreckt. Der zweite Lenker 57 hat eine zweite Hebellänge, die sich von dem dritten Gelenk 57.1 zum vierten Gelenk 57.2 erstreckt. Dabei ist die Zuordnung so getroffen, dass die erste Hebellänge größer ist als die zweite Hebellänge. Vorzugsweise ist die erste Hebellänge mindestens doppelt so groß wie die zweite Hebellänge. Besonders bevorzugt ist das Verhältnis zweite Hebellänge zu erster Hebellänge im Bereich zwischen 1:2 und 1:3 gewählt, vorzugsweise beträgt dieses Verhältnis im Bereich zwischen 1:2,3 bis 1:2,7.

Die durch die Gelenke 51.1, 51.2, 57.1, 57.2 gebildeten Gelenksachsen sind zueinander parallel. Auf diese Weise wird ein Viergelenkssystem gebildet, um das der proximale Endbereich 41 schwenkbar gegenüber dem Maschinenkörper 12 ist.

Im Rahmen der Erfindung kann es vorgesehen sein, dass zu beiden Seiten des Förderbands 40 jeweils ein erster Lenker 51 und ein zweiter Lenker 57 angeordnet sind. Aus Gründen der Verringerung des Teileaufwandes sind die Lenker 51, 57 vorzugsweise baugleich ausgebildet.

Die einander gegenüberliegenden Gelenke 51.1, 51.2, 57.1, 7 50.2 der Lenker 51,57 weisen zueinander fluchtende Gelenksachsen auf, sodass das Viergelenkssystem erhalten bleibt.

Figur 2 zeigt weiter, dass der erste Lenker 51 ein Koppelstück 51.3 aufweist. An diesem Koppelstück 51.3 ist ein Kraftübertragungsmittel 54 mit einer Koppelstelle 54.1 befestigt. Bei dem Kraftübertragungsmittel 54 handelt es sich um ein biegeschlaffes Bauteil, beispielsweise um ein Seil oder eine Kette.

Das Kraftübertragungsmittel 54 ist über eine Umlenkung, beispielsweise eine Umlenkrolle geführt. Die Umlenkung ist im Bereich der Querstrebe 17.1 an einem der Träger 17 befestigt. Im Anschluss an die Umlenkungen weist das Kraftübertragungsmittel 54 eine zweite Koppelstelle 54.2 auf. Diese Koppelstelle 54.2 ist an ein Stellglied 55 angeschlossen. Das Stellglied 55 weist einen Aktuator 55.2 auf, der in Form eines Hydraulikzylinders ausgebildet sein kann.

Der Hydraulikzylinder weist einen Zylinder auf, in dem ein Kolben geführt ist. An den Kolben ist eine Kolbenstange 55.1 angeschlossen. Die Kolbenstange 55.1 ist an die Koppelstelle 54.2 angeschlossen. Der Aktuator 55.2 besitzt ein Koppelglied 55.3. Mit diesem ist er an den Maschinenkörper 12, vorzugsweise an den Träger 17 angeschlossen.

In der in Figur 2 gezeigten Position befindet sich das Förderband 40 in einer ersten Arbeitsposition, die eine Grundstellung bildet. Zur Fixierung dieser Grundstellung besitzt das Förderband 40 einen Anschlag 58. Dieser Anschlag 58 ist formschlüssig an einem Gegenanschlag 18.1 am Maschinenkörper 12 abgestützt, sodass sich das distale Ende 42 nicht weiter absenken kann.

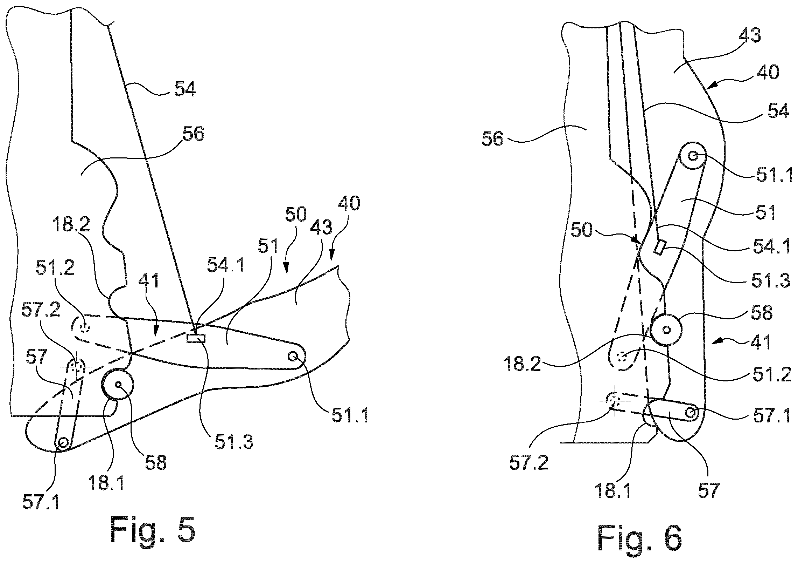

Ausgehend aus der in Figur 2 gezeigten Grundstellung kann das Förderband 40 entgegen der Schwerkraftrichtung aufgeklappt, also entgegen der Schwerkraftrichtung nach oben verschwenkt werden. Hierzu wird zunächst das Sicherungselement 53 entfernt und dann der Aktuator 55.2 betätigt. Dann zieht sich die Kolbenstange 55.1 in den Zylinder hinein und das Kraftübertragungsmittel 54 wird gezogen. Auf diese Weise hebt das Kraftübertragungsmittel 54 an dem Koppelstück 51.3 den ersten Lenker 51. Dabei führt der Stellmechanismus die in den Figuren 5 und 6 gezeigte Schwenkbewegung durch.

Wie die Figuren 5 und 6 erkennen lassen, wird bei der Schwenkbewegung das proximale Ende des Förderbands 40, welches von dem über das erste Gelenk 57.1 vorstehenden Endabschnitt des proximalen Endbereichs 41 gebildet ist, aus der in Figur 5 gezeigten Grundstellung heraus von unterhalb des Maschinenkörpers 12 hin in Richtung seitlich zum Maschinenkörper 12 geführt. Dabei ist die Schwenkbewegung derart, dass das proximale Ende auf einer Bogenbahn geführt wird und sich dabei nicht oder nur geringfügig absenkt. Auf diese Weise wird verhindert, dass das proximale Ende des Förderbands 40 mit einem darunterliegenden Bereich, beispielsweise dem Boden kollidiert.

In der Figur 6 ist das Förderband 40 in der aufgeklappten Transportstellung befindlich. Diese Stellung ist auch in Figur 3 gezeigt. Die Schwenkbewegung wird mit dem Anschlag 58 begrenzt, der an einem maschinenkörperseitigen Anschlag 18.2 formschlüssig zur Anlage kommt.

Wenn sich das Förderband 40 in der aufgeklappten Transportposition befindet, kann der Förderbandteil 44 gegenüber dem Basisteil 43 um das Schwenklager 45 herum abgeklappt werden. Dabei wird dann das Förderbandteil 44 in Schwerkraftrichtung abgeklappt, bis es seitlich des Maschinenkörpers 12 zum Liegen kommt. Auf diese Weise wird eine kompakte Bauweise in der Transportstellung erreicht.

Das Förderband 40 lässt sich nicht nur alleine in der in Figur 2 gezeigten Grundstellung einstellen. Vielmehr kann das Basisteil 43 des Förderbands 40 auch in eine beliebige Zwischenposition zwischen der in Figur 2 gezeigten Grundstellung und der aufgeklappten Stellung gemäß Figur 3 verschwenkt werden. Hierzu wird der Aktuator 55.2 betätigt und die Kolbenstange 55.1 eingezogen, bis die gewünschte Schwenkstellung des Förderbands 40 erreicht ist. Diese Schwenkstellung kann beispielsweise mit dem Sicherungselement 53 gesichert werden, so dass der Aktuator 55.2 entlastet ist. Zu diesem Zweck kann insbesondere eine Spannvorrichtung 53.3 verwendet sein, mit der sich die Länge des teleskopierbaren Sicherungselements 53 zwischen den beiden Lagern 53.1,53.2 stufenlos einstellen lässt.

Wie die Figuren 2, 5 und 6 zeigen, können der Gegenanschlag 18.1 und/oder der Anschlag 18.2 von einem Stützkörper 56 gebildet sein. Beispielsweise kann dieser Stützkörper 56 von einem Blechzuschnitt gebildet sein, der an den Maschinenkörper 12 angekoppelt ist.

Über den Stützkörper 56 lässt sich in der ersten Arbeitsposition (gemäß Figur 2) ein Teil der Last des Förderbands 40 in den Maschinenkörper 12 abgetragen.

Der Anschlag 18.2 kann beispielsweise dazu verwendet werden, das Förderband 40 in der in Figur 6 gezeigten Transportposition sicher abzustützen.

## Patentansprüche

1. Materialverarbeitungseinrichtung (10), insbesondere mobile Mineralverarbeitungseinrichtung (10), mit einem Förderband (40), für den Transport von Material von oder zu einer Materialverarbeitungseinheit (10), wobei das Förderband (40) einen aufgabeseitigen proximalen Endbereich (41) und einen abwurfseitigen distalen Endbereich (42) aufweist, wobei zwischen dem proximalen und dem distalen Endbereich (41 und 42) des Förderbands (40) ein Mittenbereich des Förderbands (40) gebildet ist, wobei das Förderband (40) an seinem proximalen Endbereich (41) mittels einer Gelenkverbindung schwenkbar an einen Maschinenkörper (12) angelenkt ist, und wobei das Förderband (40) mittels einer Stelleinheit (55) und der Gelenkverbindung von einer abgeklappten Arbeitsstellung in eine aufgeklappte Transportposition verstellbar ist,
und wobei die Gelenkverbindung Teil eines von der Stelleinheit (55) betätigten Stellmechanismus (50) ist, der das proximale freie Ende des proximalen Endbereichs (41) des Förderbands (40) während der Verschwenkung von der abgeklappten Arbeitsposition in die aufgeklappte Transportposition so führt, dass das Förderband (40) an seinem proximalen Ende verschwenkt und entgegen der Schwerkraftrichtung angehoben wird, **dadurch gekennzeichnet,**
**dass** der Stellmechanismus (50) einen ersten und einen zweiten Lenker (51, 57) aufweist, dass der erste Lenker (51) mittels eines ersten Gelenks (51.1) an einem Maschinenkörper (12) der Materialverarbeitungseinrichtung (10) und mittels eines zweiten Gelenks (51.2) an dem proximalen Endbereich (41) des Förderbands (40) schwenkbar angekoppelt ist, dass der zweite Lenker (57) mittels eines dritten Gelenks (57.1) an dem Maschinenkörper (12) der Materialverarbeitungseinrichtung (10) und mittels eines vierten Gelenks (57.2) an dem proximalen Endbereich (41) des Förderbands (40) schwenkbar angekoppelt ist, und dass das zweite und das vierte Gelenk (51.2, 57.2) unterschiedlich weit von dem proximalen Ende beabstandet sind.

2. Materialverarbeitungseinrichtung (10), nach Anspruch 1, **dadurch gekennzeichnet, dass** das proximale Ende des Förderbands (40) in der Arbeitsposition unterhalb eines Maschinenkörpers (12) der Materialverarbeitungseinrichtung (10) so angeordnet ist, dass eine Materialfördereinrichtung der Materialverarbeitungseinrichtung (10) mit ihrem Abwurfbereich entgegen der Schwerkraftrichtung oberhalb des proximalen Endbereichs (41) des Förderbands (40) endet, und dass in der Transportposition das proximale Ende des Förderbands (40) seitlich und im horizontalen Abstand zu dem Abwurfbereich der Materialfördereinrichtung steht.

3. Materialverarbeitungseinrichtung (10) nach Anspruch 1 oder 2, **dadurch gekennzeichnet, dass** der erste Lenker (51) eine erste Hebellänge zwischen dem ersten und dem zweiten Gelenk (51.1, 51.2) und der zweite Lenker (57) eine zweite Hebellänge zwischen dem dritten und dem vierten Gelenk (57.1, 57.2) aufweist, und dass die Hebellängen unterschiedlich sind, vorzugsweise der erste Lenker (51), welcher mit dem zweiten Gelenk (51.2) näher am proximalen Ende des Förderbands (40) angekoppelt ist, eine längere Hebellänge aufweist als der zweite Lenker (57), wobei besonders bevorzugt das Verhältnis der zweiten Hebellänge zu der ersten Hebellänge zwischen 1:2 und 1:3 gewählt ist, besonders bevorzugt zwischen 1:2,3 und 1:2,7, gewählt ist.

4. Materialverarbeitungseinrichtung (10) nach einem der Ansprüche 1 bis 3 , **dadurch gekennzeichnet, dass** wenigstens einer der Lenker (51, 57) des Stellmechanismus (50) ein Koppelstück (51.3) aufweist, an das ein Kraftübertragungsmittel (54) der Stelleinheit (55) angekoppelt ist.

5. Materialverarbeitungseinrichtung (10) nach einem der Ansprüche 1 bis 4, **dadurch gekennzeichnet, dass** das Kraftübertragungsmittel (54) ein Zugmittel, insbesondere ein biegeschlaffes Bauteil ist, das mit einem Aktuator (55.2) der Stelleinheit (55), insbesondere mit einer motorischen oder hydraulischen Einheit, vorzugsweise mit einem Hydraulikzylinder gekoppelt ist,
oder dass ein Aktuator (55.2), insbesondere ein Linear-Aktuator, vorzugsweise ein Hydraulikzylinder, an einem der Lenker (51, 57) schwenkbar angekoppelt ist.

6. Materialverarbeitungseinrichtung (10) nach einem der Ansprüche 1 bis 5, **dadurch gekennzeichnet, dass** am proximalen Endbereich (41) des Förderbands (40) ein Halter (52) vorgesehen ist, an dem ein Sicherungselement (53) mittels eines ersten Lagers (53.1) angeschlossen ist, und dass das Sicherungselement (53) ein zweites Lager (53.2) aufweist, mittels dem das Sicherungselement (53) in der Arbeitsposition und/oder der Transportposition des Förderbands (40) an einem Träger (17) der Materialverarbeitungseinrichtung (10) befestigt ist.

7. Materialverarbeitungseinrichtung (10) nach einem der Ansprüche 1 bis 6, **dadurch gekennzeichnet, dass** an einem der Lenker (51, 57) ein Anschlag (58) angeordnet ist, der in der Arbeitsposition und/oder in der Transportposition an einem Gegenanschlag (18.1, 18.2) der Materialverarbeitungseinrichtung (10) anliegt.

8. Materialverarbeitungseinrichtung (10) nach einem der Ansprüche 1 bis 7, **dadurch gekennzeichnet, dass** auf den beiden, der sich von dem proximalen Ende zum distalen Ende hin erstreckenden Seiten des proximalen Endbereichs jeweils ein erster und ein zweiter Lenker (51, 57) angeordnet sind, wobei die Gelenke (51.1, 51.2, 57.1, 57.2) der Lenker (51, 57) jeweils paarweise, zur Bildung gemeinsamer Schwenkachsen miteinander fluchten.

9. Materialverarbeitungseinrichtung (10) nach einem der Ansprüche 1 bis 8, **dadurch gekennzeichnet, dass** das Förderband (40) ein Basisteil (43) aufweist, welches den proximalen Endbereich (41) bildet, dass mit dem Basisteil (43) ein Förderbandteil (44) mittels eines Schwenklagers (45) verbunden ist, und dass mittels des Schwenklagers (45) das Förderbandteil (44) gegenüber dem Basisteil (43) verschwenkbar ist, wobei vorzugsweise die Schwenkachse senkrecht zur Förderrichtung des Förderbands (40) verläuft.

10. Materialverarbeitungseinrichtung (10) nach einem der Ansprüche 1 bis 9, **dadurch gekennzeichnet, dass** die Materialverarbeitungseinheit (10) eine Siebeinheit ist, wobei die Siebeinheit wenigstens ein, vorzugsweise wenigstens zwei übereinander angeordnete Siebdecks (11) aufweist, wobei das durch zumindest ein Siebdeck (11) hindurchgesiebte Material von der Siebeinheit mittelbar oder unmittelbar auf den proximalen Endbereich (41) des Förderbands (40) gefördert wird.

11. Materialverarbeitungseinrichtung (10) nach Anspruch 10, **dadurch gekennzeichnet, dass** die Siebeinheit einen Ableitbereich (11.1) aufweist, wobei der Ableitbereich (11.1) an die Oberseite eines Siebdecks (11) angeschlossen ist, wobei der Ableitbereich (11.1) mittelbar oder unmittelbar zu einem Rückführband (30) geführt ist, und dass das Rückführband (30) ein Abwurfende (35) aufweist, über das das von dem Rückführband (30) geförderte Förderbandmaterial einer Materialverarbeitungseinheit, insbesondere einem Brechaggregat zugeleitet ist.

12. Materialverarbeitungseinrichtung (10) nach Anspruch 10 oder 11, **dadurch gekennzeichnet, dass** die Siebeinheit ein Feinkornband (20) aufweist, wobei das Feinkornband (20) unterhalb eines Siebdecks (11) angeordnet ist und dort eine ausgesiebte Feinkornfraktion aufnimmt und zu einem Abwurfende 22 des Feinkornbands (20) transportiert.

## Claims

1. Material processing device (10), in particular a mobile mineral processing device (10), with a conveyor belt (40) for transporting material from or to a material processing device (10), wherein the conveyor belt (40) has a feed-side proximal end area (41) and a discharge-side distal end area (42), wherein a central region of the conveyor belt (40) is formed between the proximal and distal end areas (41 and 42) of the conveyor belt (40), wherein the conveyor belt (40) is pivotably connected to a machine body (12) at its proximal end area (41) by means of a hinge connection, and wherein the conveyor belt (40) can be adjusted from a folded-down working position to a folded-up transport position by means of a control unit (55) and the articulated joint,
and wherein the articulated joint is part of a control mechanism (50) actuated by the control unit (55), which guides the proximal free end of the proximal end area (41) of the conveyor belt (40) during the pivoting from the folded-down working position into the unfolded transport position in such a way that the conveyor belt (40) is pivoted at its proximal end and lifted against the direction of gravity,
**characterized in that** the control mechanism (50) has a first and a second link (51, 57),
that the first link (51) is pivotally coupled to a machine body (12) of the material processing device (10) by means of a first joint (51.1)
and pivotally coupled to the proximal end area (41) of the conveyor belt (40) by means of a second joint (51.2),
that the second link (57) is pivotably coupled to the machine body (12) of the material processing device (10) by means of a third joint (57.1)
and pivotally coupled to the proximal end area (41) of the conveyor belt (40) by means of a fourth joint (57.2),
and that the second and fourth joints (51.2, 57.2) are spaced at different distances from the proximal end.

2. Material processing device (10) according to claim 1, **characterized in that** the proximal end of the conveyor belt (40) is arranged in the working position below a machine body (12) of the material processing device (10) in such a way that a material conveyor of the material processing device (10) ends with its discharge area above the proximal end area (41) of the conveyor belt (40) against the direction of gravity, and that in the transport position, the proximal end of the conveyor belt (40) is located laterally and at a horizontal distance from the discharge area of the material conveyor.

3. Material processing device (10) according to claim 1 or 2, **characterized in that** the first link (51) has a first lever length between the first and second joints (51.1, 51.2) and the second link (57) has a second lever length between the third and fourth joints (57.1, 57.2), and that the lever lengths are different, preferably the first link (51), which is coupled closer to the proximal end of the conveyor belt (40) with the second joint (51.2) closer to the proximal end of the conveyor belt (40), has a longer lever length than the second link (57), wherein it is particularly preferred that the ratio of the second lever length to the first lever length is selected to be between 1:2 and 1:3, particularly preferably between 1:2.3 and 1:2.7.

4. Material processing device (10) according to one of claims 1 to 3, **characterized in that** at least one of the links (51, 57) of the control mechanism (50) has a coupling means (51.3) to which a power transmission means (54) of the control unit (55) is coupled.

5. Material processing device (10) according to one of claims 1 to 4, **characterized in that** the power transmission means (54) is a tension means, in particular a flexibly slack component, which is coupled to an actuator (55.2) of the control unit (55), in particular a motor or hydraulic unit, preferably a hydraulic cylinder, or that an actuator (55.2), in particular a linear actuator, preferably a hydraulic cylinder, is pivotably coupled to one of the links (51, 57).

6. Material processing device (10) according to one of claims 1 to 5, **characterized in that** a holder (52) is provided at the proximal end area (41) of the conveyor belt (40), to which a securing element (53) is connected by means of a first bearing (53.1), and that the securing element (53) has a second bearing (53.2) by means of which the securing element (53) is fastened to a support (17) of the material processing device (10) in the working position and/or the transport position of the conveyor belt (40).

7. Material processing device (10) according to one of claims 1 to 6, **characterized in that** a stop (58) is arranged on one of the links (51, 57), which rests against a counter-stop (18.1, 18.2) of the material processing device (10) in the working position and/or in the transport position.

8. Material processing device (10) according to one of claims 1 to 7, **characterized in that** a first and a second link (51, 57) are arranged on each of the two sides of the proximal end area extending from the proximal end to the distal end, wherein the joints (51.1, 51.2, 57.1, 57.2) of the links (51, 57) are aligned in pairs with each other to form common pivot axes.

9. Material processing device (10) according to one of claims 1 to 8, **characterized in that** the conveyor belt (40) has a base part (43) which forms the proximal end area (41), **in that** a conveyor belt part (44) is connected to the base part (43) by means of a swivel bearing (45), and that the conveyor belt part (44) can be pivoted relative to the base part (43) by means of the swivel bearing (45), wherein the pivot axis preferably extends perpendicular to the conveying direction of the conveyor belt (40).

10. Material processing device (10) according to one of claims 1 to 9, **characterized in that** the material processing device (10) is a screening unit, wherein the screening unit has at least one, preferably at least two screening decks (11) arranged one above the other, wherein the material screened through at least one screening deck (11) is conveyed by the screening unit directly or indirectly to the proximal end area (41) of the conveyor belt (40).

11. Material processing device (10) according to claim 10, **characterized in that** the screening unit has a discharge section (11.1),
wherein the discharge section (11.1) is connected to the upper side of a screening deck (11),
wherein the discharge section (11.1) is connected directly or indirectly to a return belt (30),
and that the return belt (30) has a discharge end (35) via which the conveyor belt material conveyed by the return belt (30) is fed to a material processing unit, in particular a crushing unit.

12. material processing device (10) according to claim 10 or 11, **characterized in that** the screening unit has a fine-grain belt (20), wherein the fine-grain belt (20) is arranged below a screening deck (11) and receives a screened fine grain fraction there and transports it to a discharge end (22) of the fine-grain belt (20).

## Revendications

1. Dispositif de traitement de matériaux (10), en particulier dispositif mobile de traitement de minéraux (10), comprenant une bande transporteuse (40) pour le transport de matériaux depuis ou vers une unité de traitement de matériaux (10), la bande transporteuse (40) présentant une zone d'extrémité proximale côté alimentation (41) et une zone d'extrémité distale côté déchargement (42), une zone centrale de la bande transporteuse (40) étant formée entre les zones d'extrémité proximale et distale (41 et 42) de la bande transporteuse (40), la bande transporteuse (40) étant articulée de manière pivotante à un corps de machine (12) au niveau de sa zone d'extrémité proximale (41) au moyen d'une articulation, et la bande transporteuse (40) pouvant être déplacée au moyen d'une unité de réglage (55) et de la liaison articulée d'une position de travail rabattue à une position de transport dépliée, et la liaison articulée faisant partie d'un mécanisme de réglage (50) actionné par l'unité de réglage (55), qui guide l'extrémité libre proximale de la zone d'extrémité proximale (41) de la bande transporteuse (40) pendant le pivotement de la position de travail rabattue à la position de transport dépliée, de telle sorte que la bande transporteuse (40) pivote à son extrémité proximale et soit soulevée à l'encontre de la direction de la force de gravité,
**caractérisé en ce que** le mécanisme de réglage (50) comporte une première et une deuxième bras (51, 57), la première bras (51) étant couplée de manière pivotante à un corps de machine (12) du dispositif de traitement des matériaux (10) au moyen d'une première articulation (51.1) et à la région d'extrémité proximale (41) de la bande transporteuse (40) au moyen d'une deuxième articulation (51.2), la deuxième bras (57) étant couplée de manière pivotante au corps de machine (12) du dispositif de traitement des matériaux (10) au moyen d'une troisième articulation (57.1) et à la région d'extrémité proximale (41) de la bande transporteuse (40) au moyen d'une quatrième articulation (57.2). et que les deuxième et quatrième articulations (51.2, 57.2) sont espacées à des distances différentes de l'extrémité proximale.

2. Dispositif de traitement de matériaux (10) selon la revendication 1, **caractérisé en ce que** l'extrémité proximale de la bande transporteuse (40) est disposée en position de travail sous un corps de machine (12) du dispositif de traitement de matériaux (10) de telle sorte qu'un dispositif de transport de matériaux du dispositif de traitement de matériaux (10) se termine avec sa zone de déversement à l'opposé de la direction de la force de gravité au-dessus de la zone d'extrémité proximale (41) de la bande transporteuse (40), et que, dans la position de transport, l'extrémité proximale de la bande transporteuse (40) se trouve latéralement et à distance horizontale de la zone de déversement du dispositif de transport de matériaux.

3. Dispositif de traitement de matériaux (10) selon la revendication 1 ou 2, **caractérisé en ce que** le premier bras (51) présente une première longueur de levier entre la première et la deuxième articulation (51.1, 51.2) et le deuxième bras (57) présente une deuxième longueur de levier entre la troisième et la quatrième articulation (57.1, 57.2), et **en ce que** les longueurs de levier sont différentes, de préférence le premier bras (51), qui est couplé à la deuxième articulation (51.2) est couplé plus près de l'extrémité proximale de la bande transporteuse (40), présente une longueur de levier plus longue que le deuxième bras (57), le rapport entre la deuxième longueur de levier et la première longueur de levier étant de préférence choisi entre 1:2 et 1:3, de préférence entre 1:2,3 et 1:2,7.

4. Dispositif de traitement de matériaux (10) selon l'une des revendications 1 à 3, **caractérisé en ce qu'**au moins l'un des bras (51, 57) du mécanisme de réglage (50) comporte une pièce d'accouplement (51.3) à laquelle est couplé un moyen de transmission de force (54) de l'unité de réglage (55).

5. Dispositif de traitement de matériaux (10) selon l'une des revendications 1 à 4, **caractérisé en ce que** le moyen de transmission de force (54) est un moyen de traction, en particulier un composant flexible, qui est couplé à un actionneur (55.2) de l'unité de réglage (55), en particulier à une unité motorisée ou hydraulique, de préférence à un vérin hydraulique, ou **en ce qu'**un actionneur (55.2), en particulier un actionneur linéaire, de préférence un vérin hydraulique, est couplé de manière pivotante à l'un des bras (51, 57).

6. Dispositif de traitement de matériaux (10) selon l'une des revendications 1 à 5, **caractérisé en ce qu'**un support (52) est prévu à l'extrémité proximale (41) de la bande transporteuse (40), auquel un élément de sécurité (53) est relié au moyen d'un premier palier (53.1), et **en ce que** l'élément de sécurité (53) comporte un deuxième palier (53.2) au moyen duquel l'élément de sécurité (53) est fixé à un support (17) du dispositif de traitement de matériaux (10) dans la position de travail et/ou la position de transport de la bande transporteuse (40).

7. Dispositif de traitement de matériaux (10) selon l'une des revendications 1 à 6, **caractérisé en ce qu'**une butée (58) est disposée sur l'un des bras (51, 57), laquelle butée repose contre une contre-butée (18.1, 18.2) du dispositif de traitement de matériaux (10) dans la position de travail et/ou dans la position de transport.

8. Dispositif de traitement de matériaux (10) selon l'une des revendications 1 à 7, **caractérisé en ce qu'**un premier et un deuxième bras (51, 57) sont disposés respectivement sur les deux côtés de la zone d'extrémité proximale s'étendant de l'extrémité proximale vers l'extrémité distale, les articulations (51.1, 51.2, 57.1, 57.2) des bras (51, 57) sont alignées par paires pour former des axes de pivotement communs.

9. Dispositif de traitement de matériaux (10) selon l'une des revendications 1 à 8, **caractérisé en ce que** la bande transporteuse (40) comporte une partie de base (43) qui forme la zone d'extrémité proximale (41), **en ce qu'**une partie de bande transporteuse (44) est reliée à la partie de base (43) au moyen d'un palier pivotant (45), et que la partie de bande transporteuse (44) peut pivoter par rapport à la partie de base (43) au moyen du palier pivotant (45), l'axe de pivotement s'étendant de préférence perpendiculairement à la direction de transport de la bande transporteuse (40).

10. Dispositif de traitement de matériaux (10) selon l'une des revendications 1 à 9, **caractérisé en ce que** l'unité de traitement de matériaux (10) est une unité de criblage, l'unité de criblage comportant au moins un, de préférence au moins un tamis (11) superposés, le matériau criblé par au moins un tamis (11) est transporté par l'unité de criblage directement ou indirectement vers la zone d'extrémité proximale (41) de la bande transporteuse (40).

11. Dispositif de traitement de matériaux (10) selon la revendication 10, **caractérisé en ce que** l'unité de criblage comprend une zone de dérivation (11.1), la zone de dérivation (11.1) étant reliée à la face supérieure d'un tamis (11), la zone de dérivation (11.1) est reliée directement ou indirectement à une bande de retour (30), et **en ce que** la bande de retour (30) comporte une extrémité de déversement (35) par laquelle le matériau transporté par la bande de retour (30) est acheminé vers une unité de traitement de matériau, en particulier un concasseur.

12. Dispositif de traitement de matériaux (10) selon la revendication 10 ou 11, **caractérisé en ce que** l'unité de criblage comporte une bande à grains fins (20), la bande à grains fins (20) étant disposée sous un tamis (11) et y recevant une fraction de grains fins criblés et la transportant vers une extrémité de déversement 22 de la bande à grains fins (20).
